# EUROPEAN PATENT SPECIFICATION

(11) **EP 3 445 214 B1**
(45) Date of publication and mention of the grant of the patent: **18.12.2019**
(21) Application number: 17724617.0
(22) Date of filing: 12.04.2017
(51) Int. Cl.: A47J 36/02, C22C 38/18, F16K 31/06

(54) **SOLENOID VALVE WITH SPECIAL STEEL COMPONENTS**
MAGNETVENTIL MIT SPEZIALSTAHLKOMPONENTEN
ÉLECTROVANNE DOTÉE DE COMPOSANTS EN ACIER SPÉCIAL

(30) Priority: 18.04.2016 IT UA20164094 U
(43) Date of publication of application: 27.02.2019
(73) Proprietor: Ode S.r.l., 23823 Colico (LC) (IT)
(72) Inventor: GUERCI, Alessio, 23822 Bellano (CL) (IT)
(74) Representative: Riccardi, Sergio
(86) International application number: PCT/IB2017/000428
(87) International publication number: WO 2017/182865

(56) References cited:
- WO-A1-2016/020745
- US-A- 4 814 140
- US-A1- 2007 039 951
- US-A1- 2015 313 274
- Anonymous: "INCONEL 718 - Nickel-Chromium-Molybdenum Superalloy", , 1 July 2013 (2013-07-01), XP055389113, Retrieved from the Internet: URL:http://www.azom.com/article.aspx?Artic leID=9440 [retrieved on 2017-07-07]
- Gruppo Lucefin: "Free Machining Austenitic Stainless Steel X2CrNiMoCuS17-10-2", , 29 September 2014 (2014-09-29), pages 1-2, XP055389095, Retrieved from the Internet: URL:http://www.lucefin.com/wp-content/file s_mf/1.4598en.pdf [retrieved on 2017-07-07]

## Description

The present invention relates to a solenoid valve with special steel components, having highly innovative and advantageous features.

The constantly increasing water consumption all over the world, indissolubly connected with a variety of uncontrollable factors, such as the bewildering increase of the earth's population, the climatic mutations, the global warming and desertification of vast continental zones, mainly due to the greenhouse effect, obliges to use water that must more and more undergo heavy sanification treatments, in order to be declared drinkable water.

The strong attention to the quality of drinkable water (and adoption in most countries of specific regulations related to the field of drinkable water) caused an increasing use of specific treatments of water sanification. Chlorination is the method mostly used in many countries for disinfection of drinking water. The aqueous solutions of sodium chloride, calcium chloride, ferric chloride, cupric chloride constitute a favorable environment for corrosive phenomena of stainless steel.

In the valves to be used in contact with food or drinking water, some components are made of stainless steel. The alloy elements such as nickel, chromium and molybdenum present in stainless steel, have a positive impact on the corrosion strength of steel. Therefore the maximum corrosion strength is given by special stainless steel with high molybdenum content, by austenitic - ferritic steels and austenitic steel containing molybdenum.

More particularly, in the solenoid valves used in articles for the food market, such as coffee percolators, dispensing machines for hot and cold beverages and the like, the components in contact with the delivered liquid are made of stainless steel, more particularly the inner sleeve of the magnetic core of the solenoid valve, which is the part requiring the highest degree of corrosion strength and at the same time the best machinability, however without overlooking the cost and durability requirements.

Thus there is always the need of special stainless steels meeting all these requirements at the same time. After careful research and tests, the Applicant's attention was focused on a particular chrome-nickel-molybdenum austenitic stainless steel with low carbon content, up to now used for special applications in the medical field to make steel dental mills, chemical appliances, mechanical parts for very corrosive environments and aerospace applications.

This austenitic steel, belonging to the general series AISI 300, is indicated by the codes EN 1.4598 and DIN X2CrNiMoCuS 17-10-2, has the indicative chemical composition of the following table where percentages are by weight, the balance being iron.

| **C%** max | **Si%** max | **Mn%** max | **P%** max | **S%** | **Cr%** | **Ni%** | **N%** max | **Mo%** | **Cu%** |
|---|---|---|---|---|---|---|---|---|---|
| 0,03 | 1,00 | 2,00 | 0,045 | 0,10-0,20 | 16,5-18,5 | 10,0-13,0 | 0,11 | 2,0-2,5 | 1,3-1,8 |
| ±0.005 | + 0.05 | ± 0.04 | +0.005 | ± 0.02 | ± 0.2 | ± 0.15 | ± 0.01 | ± 0.1 | ± 0.1 |

With the above identified steel, sleeves were manufactured for solenoid valves in contact with food and/or drinkable water, such a component being more precisely referred to as inlet tube or armature tube, being displayed in bold lines and identified with letter C on the annexed schematic drawing showing an illustrative solenoid valve suitable for said uses. The lot of material used for this purpose had the following chemical composition:

| **C** | **Si** | **Mn** | **P** | **S** | **Cr** | **Mo** | **Ni** | **Cu** |
|---|---|---|---|---|---|---|---|---|
| 0,020 | 0,34 | 1,81 | 0,026 | 0,13 | 17,00 | 2,07 | 11,08 | 1,42 |

The bar steel annealed and cold-drawn, was machined with multispindles to make the sleeves, and Applicant already obtained the authorization of the US organization NSF, namely the world certification institution for food and water safety, approving use of this type of steel inside their solenoid valves certified according to standards NSF 169 and NSF 61, namely for valves in contact both with food and drinking water. This material also positively passed the global migration test as well as the specific migration tests of nickel (Ni), chromium (Cr) and manganese (Mn) under contact conditions of 30 min, repeated contact, distilled water simulant A.

The chrome-nickel-molybdenum austenitic stainless steel has a high machinability with consequent reduction of manufacturing costs, since it may be worked quickly with multispindle lathes, unless other steels of series AISI 300 having high corrosion strength (AISI 304, AISI 316) that can be worked only on single spindle lathes and with extreme difficulty on multispindle lathes.

The chrome-nickel-molybdenum austenitic stainless steel has a global and specific migration falling within the limits provided by the current food safety rules. The migration values focused with the special steel are lower than those found for steel AISI 303.

Moreover this steel differs from the steels currently and generally used to make sleeves of solenoid valves (AISI 303) for its exceptional resistance to any kind of corrosion, such as due to water, weather, chemicals and intercrystalline corrosion.

Indeed this special steel is used for manufacturing said sleeve which is the critical component of the solenoid valve, since it has a very reduced thickness. Between the sleeve and the magnetic core there is an interstice favoring deposit of ions Cl⁻ present in drinking water. Ions Cl⁻ create an aggressive environment promoting the activation of the corrosive phenomenon, which because of the sleeve reduced thickness, causes the sleeve perforation if other similar steels even of good quality are being used. By using the special steel of the invention, through holes in the sleeve are not generated.

The comparative tests, carried out on similar samples made with austenitic steel AISI 303, gave results of corrosion strength definitely lower than those of tests conducted with alloy EN 1.4598 of the present invention.

| | AISI 303 | AISI 304-316L | EN 1.4598 |
|---|---|---|---|
| Machinalbility | good | very poor | good |
| Migration | regular | regular | regular |
| Corrosion | low resistance | high resistance | high resistance |

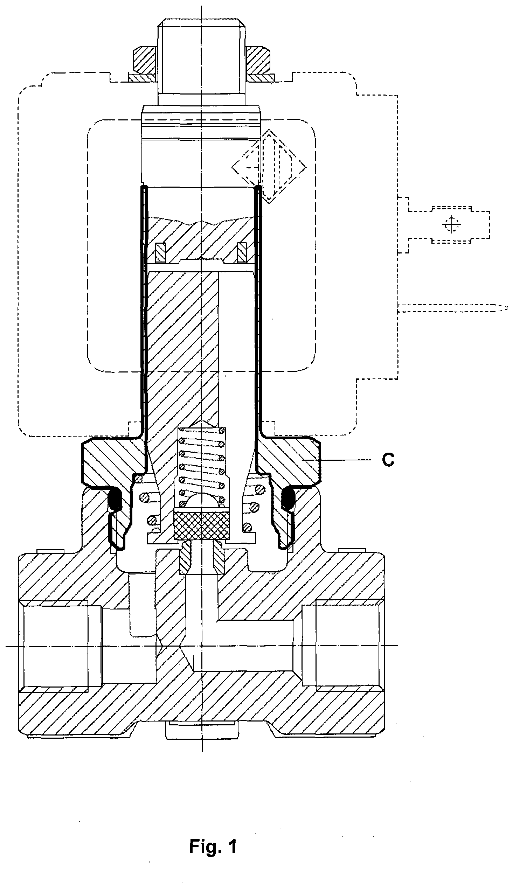

## Claims

1. A solenoid valve with special steel components, used in food processing equipments in which the components for the passage of liquids are made of stainless steel, **characterized in that** said components are made of chrome-nickel-molybdenum austenitic steel with low carbon content, wherein said austenitic steel consists of the alloy identified by codes EN 1.4598 and DIN X2CrNiMoCuS 17-10-2.

2. The solenoid valve of claim 1, wherein said alloy EN 1.4598 has the following chemical composition in percentage by weight, the balance being iron:
| **C%** max | **Si%** max | **Mn%** max | **P%** max | **S%** | **Cr%** | **Ni%** | **N%** max | **Mo%** | **Cu%** |
|---|---|---|---|---|---|---|---|---|---|
| 0,03 | 1,00 | 2,00 | 0,045 | 0,10-0,20 | 16,5-18,5 | 10,0-13,0 | 0,11 | 2,0-2,5 | 1,3-1,8 |
| ± 0.005 | + 0.05 | ± 0.04 | + 0.005 | ± 0.02 | ± 0.2 | ± 0.15 | ± 0.01 | ± 0.1 | ± 0.1 |

3. The solenoid valve of the preceding claims, wherein a solenoid valve component made of austenitic steel is the inner sleeve of the magnetic core of the solenoid valve, used for the passage of liquid.

## Patentansprüche

1. Magnetventil mit Spezialstahlkomponenten, das in Einrichtungen für die Aufbereitung von Lebensmitteln verwendet wird, worin die für den Flüssigkeitsdurchfluss bestimmten Komponenten mit Edelstahl hergestellt werden, **dadurch gekennzeichnet, dass** diese Komponenten aus austenitischem kohlenstoffarmen Chrommolybdannickelstahl bestehen, wobei dieser austenitischer Stahl aus der von den Kennzeichen EN 1.4598 bzw. DIN X2CrNiMoCuS 17-10-2 gekennzeichneten Legierung besteht.

2. Magnetventil nach Anspruch 1, **dadurch gekennzeichnet, dass** die besagte Legierung EN 1.4598 die folgende prozentuale Gewichtszusammensetzung aufweist, wobei der Rest Eisen ist:
| **C%** max | **Si%** max | **Mn%** max | **P%** max | **S%** | **Cr%** | **Ni%** | **N%** max | **Mo%** | **Cu%** |
|---|---|---|---|---|---|---|---|---|---|
| 0,03 | 1,00 | 2,00 | 0,045 | 0,10-0,20 | 16,5-18,5 | 10,0-13,0 | 0,11 | 2,0-2,5 | 1,3-1,8 |
| ±0.005 | + 0.05 | ± 0.04 | + 0.005 | ± 0.02 | ± 0.2 | ± 0.15 | ± 0.01 | ± 0.1 | ± 0.1 |

3. Magnetventil nach den vorhergehenden Ansprüchen, **dadurch gekennzeichnet, dass** eine aus dem besagten austenitischen Stahl hergestellte Komponente, das für die Flüssikeitsdurchfluss bestimmte Innenrohr des Magnetventilfestkerns ist.

## Revendications

1. Électrovanne dotée de composants en acier spécial, utilisée dans des équipements pour le traitement des substances alimentaires, dont les composants destinés au passage du liquide sont réalisés en acier inoxydable, **caractérisée en ce que** les dits composants sont constitués par acier austénitique au chrome-nickel-molybdène à basse teneur en carbone, dont le dit acier austénitique est constitué par l'alliage marqué par les sigles EN 1.4598 et DIN X2CrNiMoCuS 17-10-2.

2. Électrovanne selon la revendication1, **caractérisée en ce que** ledit alliage EN 1.4598 a la composition chimique suivante du pourcentage en poids, le reste étant fer :
| **C%** max | **Si%** max | **Mn%** max | **P%** max | **S%** | **Cr%** | **Ni%** | **N%** max | **Mo%** | **Cu%** |
|---|---|---|---|---|---|---|---|---|---|
| 0,03 | 1,00 | 2,00 | 0,045 | 0,10-0,20 | 16,5-18,5 | 10,0-13,0 | 0,11 | 2,0-2,5 | 1,3-1,8 |
| ±0.005 | + 0.05 | ± 0.04 | + 0.005 | ±0.02 | ± 0.2 | ± 0.15 | ± 0.01 | ± 0.1 | ± 0.1 |

3. Électrovanne selon les revendications précédentes, **caractérisée en ce qu'**un composant d'électrovanne fabriqué par ledit acier austénitique, est le fourreau intérieur du noyau fixe de l'électrovanne, destiné au passage du liquide.
